# EUROPEAN PATENT SPECIFICATION

(11) **EP 4 063 913 B1**
(45) Date of publication and mention of the grant of the patent: **03.09.2025**
(21) Application number: 21896521.8
(22) Date of filing: 24.09.2021
(51) Int. Cl.: G01S 17/08, G01C 21/20, G01C 21/00, G05D 1/00

(54) **LONG-DISTANCE SENSOR-BASED ENVIRONMENT BOUNDARY CONSTRUCTION METHOD AND MOBILE ROBOT**
VERFAHREN FÜR FERNSENSORBASIERTE UMGEBUNGSBEGRENZUNGSKONSTRUKTION UND MOBILER ROBOTER
PROCÉDÉ DE CONSTRUCTION DE LIMITE D'ENVIRONNEMENT FONDÉ SUR UN CAPTEUR À LONGUE DISTANCE ET ROBOT MOBILE

(30) Priority: 25.11.2020 CN 202011336257
(43) Date of publication of application: 28.09.2022
(73) Proprietor: Amicro Semiconductor Co., Ltd., Hengqin New District, Zhuhai City Guangdong 519000 (CN)
(72) Inventor: LAI, Qinwei, Zhuhai, Guangdong 519000 (CN); DAI, Jianfeng, Zhuhai, Guangdong 519000 (CN); XIAO, Gangjun, Zhuhai, Guangdong 519000 (CN)
(74) Representative: HGF
(86) International application number: PCT/CN2021/120083
(87) International publication number: WO 2022/111018

(56) References cited:
- CN-A- 106 527 424
- CN-A- 109 978 925
- CN-A- 110 488 809
- CN-A- 111 427 360
- CN-A- 112 578 392
- JP-A- 2018 142 154
- US-A1- 2018 120 852
- US-A1- 2019 114 798

## Description

### Cross Reference to Related Applications

The present disclosure claims priority of Chinese Patent Application No. CN202011336257.6, filed on November, 25, 2020, entitled "Automatic generation method for robot return-to-base code".

### Technical Field

The disclosure relates to the technical field of robot navigation and distance measurement, in particular to an environment boundary construction method based on a remote sensor and a mobile robot.

### Background

In recent years, robots having automatic action functions, such as common household cleaning sweepers are blooming. At present, common simultaneous localization and mapping (slam) technologies include visual navigation, laser navigation and inertial navigation. Compared with the other two technologies, laser navigation can bring better user experience because a room outline can be scanned in advance to be visually presented in a user interface. However, it has a defect that a rotary laser mechanism is required, such that cost is relatively higher, and a hollow or a protrusion is required on a mold. A method of mapping an environment of a mobile robot is for example disclosed in US2019/114798A1

### Summary

According to the disclosure, on the basis that light detection and ranging is not required to rotationally scan an environment outline, only according to physical boundary information which is sensed and marked by a remote sensor on a side surface of a robot, a room outline may be acquired in advance. The specific technical solution is as follows:
An environment boundary construction method based on a remote sensor includes: step 1, starting a mobile robot, and then controlling the mobile robot to rotate, so as to enable the mobile robot to mark exploration boundaries according to sensed distance information of the remote sensor; step 2, marking a local boundary according to a sensed distance of the remote sensor on the same side surface of the mobile robot when the mobile robot advances in a preset planned direction after the mobile robot completes rotation, where the preset planned direction is selected and configured from directions of all the marked exploration boundaries; and step 3, delimiting environment boundaries of an effective distance measurement area of the mobile robot by the local boundary and the exploration boundaries, where at least one remote sensor is arranged on a side surface of a body of the mobile robot.

Compared with the prior art, the technical solution has the effects that a rotary laser mechanism arranged on a top surface of a body is not required to scan and mark surrounding environment boundaries in when the robot advances, the remote sensor arranged on the side surface is used to mark local boundaries step by step; and then in combination with the exploration boundaries acquired by means of the rotation of the remote sensor at an initial position, the delimited environment boundaries of a current effective distance measurement area of the mobile robot instead of boundaries of an actual movement area of the mobile robot are formed, such that the technical effect of acquiring an outline of an indoor untraversed room area in advance is achieved.

According to the invention, after the step 3, the method further includes: in the case that it is determined that the degree of overlap between the environment boundaries delimited in the step 3 and outline boundaries of the same area on a historical map do not conform to a preset map overlap ratio, calling position and orientation information of the outline boundaries of the same area for adjustment, specifically, rotating and translating the environment boundaries delimited in the step 3 to adjust the degree of overlap between the environment boundaries delimited in the step 3 and the outline boundaries of the same area on the historical map to conform to the preset map overlap ratio, so as to supplement boundaries of distance detection blind areas of the remote sensor on the basis of the environment boundaries. The distance detection blind areas go beyond an effective detection distance of the remote sensor. The historical map is a grid map of environment boundaries pre-marked and delimited by the mobile robot in the same effective distance measurement area.

Optionally, the preset map overlap ratio includes a preset position and orientation difference. In the case that the degree of overlap between the environment boundaries delimited in the step 3 and the outline boundaries of the same area on the historical map do not conform to the preset map overlap ratio, a difference between a position and orientation of the environment boundaries delimited in the step 3 and a position and orientation the outline boundaries of the same area on the historical map is greater than the preset position and orientation difference.

Optionally, between the step 1 and the step 2, the method further includes: in the case that the mobile robot selects an exploration sub-boundary from the exploration boundaries marked by means of the rotation in the step 1, after the mobile robot completes rotation in the step 1, controlling the mobile robot to advance in an extending direction of a direction of the exploration sub-boundary. The preset planned direction of the mobile robot in the step 2 is parallel to the extending direction of the exploration sub-boundary. The exploration boundaries include the exploration sub-boundary, and the exploration sub-boundary is selected for planning a traveling direction of the mobile robot.

Optionally, in the case that the exploration sub-boundary is a linear boundary, the mobile robot is controlled to advance in an extending direction of the linear boundary, such that the preset planned direction in the step 2 is a linear direction. Then the mobile robot is controlled to advance in the linear direction in the step 2 and mark a local boundary on a fixed side of the linear direction according to the sensed distance of the remote sensor arranged on the same side surface of the mobile robot. When the mobile robot advances in the linear direction, a detection direction of the remote sensor is unique and fixed. The extending direction of the linear boundary is a linear direction.

Optionally, in the case that the exploration sub-boundary is a curved boundary, the mobile robot is controlled to advance in a direction of the curved boundary, such that after the mobile robot proceeds to the step 2, the preset planned direction is a curved direction. Then the mobile robot is controlled to advance in the curved direction and mark a local boundary on a fixed side of the curved direction according to the sensed distance of the remote sensor arranged on the same side surface of the mobile robot. When the mobile robot advances in the curved direction, a detection direction of the remote sensor is not unique. An extending direction of the curved boundary is a curved direction.

Optionally, when the mobile robot advances in the preset planned direction, in the case that the remote sensor does not sense distance information of an obstacle within the effective detection distance, a direction of the local boundary marked in the step 2 is parallel to the preset planned direction. A line distance between a path on which the mobile robot travels for marking the local boundary and the local boundary is equal to the effective detection distance, and a projection of the path on which the mobile robot travels for marking the local boundary on the local boundary overlaps the local boundary.

Optionally, when the mobile robot advances in the preset planned direction, in the case that the remote sensor senses the distance information of the obstacle within the effective detection distance, the local boundary marked in the step 2 is an outline of a corresponding side of the obstacle, and the corresponding side of the obstacle is a side surface reflecting a detection signal of the remote sensor. A linear distance between a body center of the mobile robot and a boundary point of the local boundary marked in real time is less than or equal to the effective detection distance.

Optionally, after the local boundary is marked on a grid map instantly constructed by the mobile robot, the mobile robot is controlled to transmit the grid map with the marked local boundary to a visual mobile terminal by means of wireless/wired signals such that the visual mobile terminal may display an area delimited by means of the local boundary to a user. According to the technical solution, all local boundaries are marked on the same grid map and may be displayed to a user in an interface form, so as to improve user experience.

A mobile robot includes a processing unit. At least one remote sensor is mounted on a side surface of a body of the mobile robot, and the processing unit is used for executing a program corresponding to the above environment boundary construction method.

Optionally, a mounting position of the remote sensor is in a direction perpendicular to an advancing direction of the mobile robot, where a detector direction of the remote sensor is in the direction perpendicular to the advancing direction of the mobile robot, or the detector direction of the remote sensor forms a preset detection angle relative to the advancing direction of the mobile robot; alternatively the mounting position of the remote sensor is on an advancing plane of the mobile robot and forms an inclined mounting angle relative to the advancing direction of the mobile robot, where the detector direction of the remote sensor is in the direction perpendicular to the advancing direction of the mobile robot, or the detector direction of the remote sensor forms a preset detection angle relative to the advancing direction of the mobile robot. The remote sensor is used for measuring distance information of the environment boundaries (including the exploration boundaries and the local boundary in the above technical solutions) on the fixed side of the advancing direction of the mobile robot.

Optionally, the mobile robot includes at least two remote sensors. The two remote sensors are arranged on a left side surface and a right side surface of a body of the mobile robot respectively, have detection directions both perpendicular to the advancing direction of the mobile robot, and are used for measuring distance information of obstacles on a left side and a right side of the mobile robot on the advancing plane of the mobile robot simultaneously. The advancing direction of the mobile robot points to a front end of the body of the mobile robot.

Optionally, the remote sensor is mounted on a front half side surface or a rear half side surface of a body of the mobile robot. The front half side surface and the rear half side surface of the mobile robot are separated by a central axis passing through a body center of the mobile robot, and the central axis is perpendicular to the advancing direction of the mobile robot. Compared with the prior art, the method reduces computation amount and errors consumed by marking and scanning the environment boundaries.

### Brief Description of the Drawings

Fig. 1 is a structural schematic diagram of a mobile robot disclosed in an embodiment of the disclosure.
Fig. 2 is a schematic grid diagram of exploration boundaries marked by means of rotation of a mobile robot disclosed in another embodiment of the disclosure.
Fig. 3 is a schematic grid diagram of a local boundary marked by a mobile robot when traveling along a linear path 301 disclosed in yet another embodiment of the disclosure.

### Detailed Description of the Embodiments

The technical solutions in the embodiments of the disclosure will be described in detail below with reference to the accompanying drawings in the embodiments of the disclosure.

An embodiment of the disclosure discloses an environment boundary construction method based on a remote sensor. In order to acquire room outline information without using light detection and ranging to rotationally scan environment outlines, the environment boundary construction method only uses a remote sensor on a side surface of a robot to mark physical boundary information, so as to acquire a room outline in advance. The specific steps include:
step 1, start a mobile robot, specifically, carry out power on to start the mobile robot or awaken the mobile robot from a dormant state, and then control the mobile robot to rotate a preset number of times at an initial position, so as to enable the mobile robot to sense distance information of an obstacle within an effective detection distance with a current position of the mobile robot as a center by means of a remote sensor, and distance information on the premise that no obstacle is detected, and then correspondingly mark exploration boundaries within the effective detection distance with the current position of the mobile robot as the center on a grid map. Actually, boundary points of sensed distances of the remote sensor less than or equal to the effective detection distance are marked on the grid map by the mobile robot, and grids where the boundary points are positioned are connected to form the exploration boundaries, and the boundary points are within an effective distance measurement area of the current position of the mobile robot. It should be noted that distances between the initial position of the mobile robot or a body center of the mobile robot and the boundary points of the exploration boundaries are regarded as the sensed distances acquired when the remote sensor of the mobile robot maintains rotating at the initial position. The mobile robot may acquire 360-degree environment distance information within the effective detection distance with the initial position of the mobile robot as the center when rotating, which belongs to relatively rough local area boundary information in a map exploration stage, such that it is necessary to proceed to step 2 to supplement boundary points and to adjust and perfect position coordinate information. In the step 1, the remote sensor for distance measurement may be arranged on a left side surface or a right side surface of a body of the mobile robot; or the remote sensors may be arranged on a left side surface and a right side surface of the body of the mobile robot.

It should be noted that the remote sensor may be a single-point time of flight (TOF) position sensor or a position sensitive detector (PSD) suitable for remote detection, but not light detection and ranging. The remote sensor is used for acquiring distance information between an obstacle within an effective detection distance range and the mobile robot, and the distance information is converted into angle distance obstacle information in an angle direction on a grid map to serve as map boundary information to be provided for the mobile robot for navigation and planning.

In the embodiment, the effective detection distance of the remote sensor is a distance measurement distance greater than 1 meter, and in some implementation scenarios, the effective detection distance of the remote sensor is generally required to be greater than 4 meters.

In the embodiment, at least one remote sensor is arranged on a side surface of the body of the mobile robot, a mounting position of the remote sensor is in a direction perpendicular to an advancing direction of the mobile robot, where a detector direction of the remote sensor is in the direction perpendicular to the advancing direction of the mobile robot, or the detector direction of the remote sensor forms a preset detection angle relative to the advancing direction of the mobile robot. The preset detection angle satisfies measurement of distance information on any side of the advancing direction of the mobile robot.

In another embodiment, the mounting position of the remote sensor is on an advancing plane of the mobile robot and forms an inclined mounting angle relative to the advancing direction of the mobile robot, where the detector direction of the remote sensor is in the direction perpendicular to the advancing direction of the mobile robot, or the detector direction of the remote sensor forms the preset detection angle relative to the advancing direction of the mobile robot, and the inclined mounting angle is not 90 degrees. However, in this case, measured distance information of the remote sensor subjected to angle conversion may achieve distance measurement and positioning effects the same as that of the remote sensor in the above embodiment.

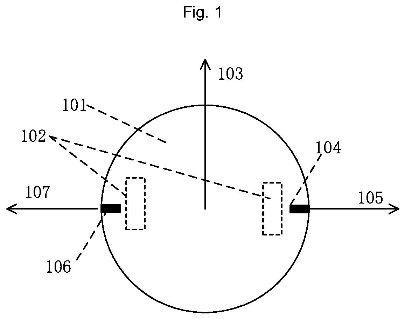

It should be noted that the remote sensor may be arranged on one side surface of the body of the mobile robot or the remote sensors may be arranged on two side surfaces of the body of the mobile robot. In the case that the remote sensors are mounted on two sides of the body, as shown in Fig. 1, the remote sensor 104 is arranged on the left side of the body 101, a detector of the remote sensor 104 points to an arrow direction 105, the remote sensor 106 is arranged on the right side of the body 101, a detector of the remote sensor 106 points to an arrow direction 107, a connecting line between the remote sensor 104 and the remote sensor 106 passes through the body center, the arrow direction 105 and the arrow direction 107 are both perpendicular to the advancing direction 103 of the mobile robot, and the mobile robot may simultaneously measure environment boundary distances on the left side and the right side in some implementation scenarios.

Step 2, when the mobile robot advances in a preset planned direction, control the remote sensor mounted on the same side surface of the mobile robot to sense and mark a local boundary, that is, to connect corresponding grid marks on the grid map into the local boundary according to the distance information sensed by the remote sensor arranged on the same side surface, and then proceed to step 3. The preset planned direction is selected and configured from directions of all marked exploration boundaries, and is used for controlling the mobile robot to continue to carry out distance measurement in a current working area or to start cleaning in an untraversed area. In the step 2, the mobile robot completes rotation in the step 1, acquires local environment information, and then advances in the preset planned direction, where the preset planned direction is an extending direction of a marked boundary selected from the local environment information acquired by means of the rotation, and the extending direction of the boundary means a direction of a line where the exploration boundary is positioned and means a line where the local boundary is positioned. Then, in the embodiment, the remote sensor is used to sense obstacle information on at least one side of the preset planned direction of the robot, and the remote sensor for remote detection on the left side or the right side of the mobile robot may be used to sense the obstacle information on the corresponding fixed side of the preset planned direction. For example, in the step 2, only the remote sensor 106 on the left side of the mobile robot is controlled to sense obstacle boundary distance information (local boundary) in a left direction 107 of the preset planned direction, and in this process, the remote sensor 104 on the right side of the mobile robot may not carry out distance measurement; or in the step 2, only the remote sensor 104 on the right side of the mobile robot is controlled to sense the obstacle boundary distance information (local boundary) in a right direction 105 of the preset planned direction, and in this process, the remote sensor 106 on the left side of the mobile robot may not carry out distance measurement. Therefore, distances between the left side or the right side of the body 101 and local boundaries (including obstacle boundaries and virtual boundaries set due to limited detection distances) are continuously acquired, and the obstacle boundary position information are supplementarily marked on grids within the effective detection distance from a marked grid of the current position of the mobile robot, and the grids are connected into the local boundaries on the grid map. In both the step 1 and step 2, the boundary information is marked on the same grid map.

It should be noted that the above marking step actually belongs to a boundary construction process of the grid map.

Step 3, delimit environment boundaries of an effective distance measurement area of the mobile robot by the local boundary and the exploration boundaries, and mark the environment boundaries on the grid map in the step 2. The effective distance measurement area of the mobile robot is an area (an area not certainly traversed by the mobile robot) covered with the remote sensor when the mobile robot executes the step 1 and the step 2, and may be understood as an indoor room area where the mobile robot executes distance measurement and mapping tasks. When the preset planned direction in the step 2 does not point to a fixed direction, the remote sensor supplements the sensed obstacle boundary distance information by sequentially sensing reflected signals in different directions, and marks a local boundary in a new direction on the grid map in combination with the effective detection distance of the remote sensor. Therefore, complete surrounding boundary information of the current position of the mobile robot may be gradually supplemented on the basis of the above exploration boundaries, overall environment outline characteristics in an effective detection range of the remote sensor may be scanned in advance, such that path planning of the mobile robot may be conveniently carried out.

Compared with the prior art, the technical solution has the effects that in the above step 1 and step 3, when the robot advances, a rotary laser mechanism mounted on a top surface of a body is not required to scan and mark surrounding environment boundaries, and the remote sensor arranged on a side surface is used to mark local boundaries step by step; and then in combination with the exploration boundaries acquired by means of rotation of the remote sensor at the initial position, the delimited environment boundaries of a current effective distance measurement area of the mobile robot instead of boundaries of an actual movement area of the mobile robot are formed, such that the technical effect of acquiring an outline of an indoor untraversed room area in advance is achieved.

As one embodiment, after the step 3, the method further includes: carry out matching and alignment on the environment boundaries delimited in the step 3 with the historical map, specifically, in the case that it is determined that the degree of overlap between the the environment boundaries delimited in the step 3 and outline boundaries of the same area on the historical map do not conform to a preset map overlap ratio, rotate and translate the environment boundaries delimited in the step 3 to adjust the degree of the overlap between the environment boundaries delimited in the step 3 and the outline boundaries of the same area on the historical map to conform to the preset map overlap ratio, which is an adjustment process of position and orientation information of the environment boundaries; in the case that the environment boundaries become the same as the position and orientation information of the outline boundaries of the same area on the historical map, supplement boundaries of distance detection blind areas of the remote sensor on the basis of the environment boundaries; and in the case that the adjusted environment boundaries overlap the outline boundaries of the same area on the historical map within an error allowable range, realize the matching and alignment. The distance detection blind areas go beyond the effective detection distance of the remote sensor, and the position and orientation information of the outline boundaries of the same area on the historical map is environment boundaries of the distance measurement area of the mobile robot marked in the pre-executed step 1 to step 3 by the mobile robot, and is a known grid map. In the embodiment, the known historical map is used for supplementing the boundaries of the detection blind areas which are not be detected due to limitation of a detection distance of the remote sensor, so as to enhance reliability of size and shape information of a map environment area instantly constructed by the mobile robot. It is worth noting that the outline boundaries of the same area on the historical map are sensed and marked by the remote sensor at the same mounting position.

Optionally, the preset map overlap ratio includes a preset position and orientation difference. In the case that the degree of overlap between the environment boundaries delimited in the step 3 and the outline boundaries of the same area on the historical map do not conform to the preset map overlap ratio, a difference between a position and orientation of the environment boundaries delimited in the step 3 and a position and orientation the outline boundaries of the same area on the historical map is greater than the preset position and orientation difference. In the case that the degree of the overlap between the environment boundaries delimited in the step 3 and the outline boundaries of the same area on the historical map conform to the preset map overlap ratio, a difference between a position and orientation of the environment boundaries delimited in the step 3 and a position and orientation the outline boundaries of the same area on the historical map is less than or equal to the preset position and orientation difference, and it is determined that the environment boundaries delimited in the step 3 overlap the outline boundaries of the same area on the historical map. In the embodiment, an overlap degree of the maps is determined according to the difference between the position and orientation of the environment boundaries marked by the remote sensor on the side surface of the mobile robot and the position and orientation of the corresponding boundaries of the historical map, so as to reduce map matching errors, such that position and orientation differences and map matching errors may be minimized in some implementation scenarios.

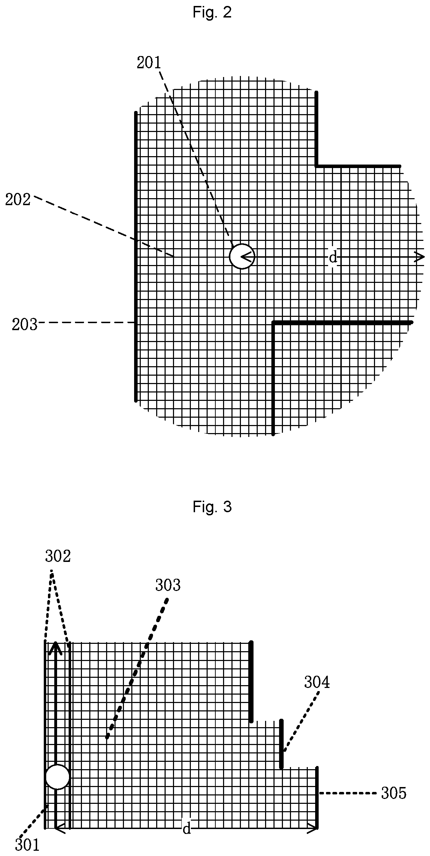

As one embodiment, between the step 1 and the step 2, the method further includes: in the case that the remote sensor of the mobile robot selects an exploration sub-boundary from the exploration boundaries marked by means of the rotation in the step 1, which is specifically as follows: as shown in Fig. 2, when rotating at a position 201, the mobile robot senses 360-degree surrounding environment distance information, marks the environment distance information as the exploration boundaries on the grid map, and then selects the exploration sub-boundary for planning a traveling direction of the mobile robot from the exploration boundaries, control the mobile robot to advance in an extending direction of the exploration sub-boundary after the mobile robot completes rotation in the step 1, where the preset planned direction of the mobile robot in the step 2 is aligned with a projection of the exploration sub-boundary, such that the traveling direction of the mobile robot may be conveniently corrected by means of the exploration sub-boundary. The exploration boundaries includes the exploration sub-boundary, and the exploration sub-boundary is selected for a pre-configured navigation task of the mobile robot.

In some implementation scenarios, when it is detected that a current advancing direction of the mobile robot deviates from the extending direction (understood as a direction of the exploration sub-boundary) of the exploration sub-boundary, the current advancing direction of the mobile robot is adjusted to be the extending direction of the exploration sub-boundary, such that the mobile robot maintains advancing in the extending direction of the exploration sub-boundary, where the exploration boundaries include the exploration sub-boundary. Before the mobile robot starts to travel and work in the preset planned direction, the exploration sub-boundary is selected from measured distance information acquired by means of rotation of the remote sensor to provide guiding information of a standard working path direction for the robot, so as to use measured distance information of a local environment included in the exploration sub-boundary to correct the preset planned direction of the mobile robot in the step 2, and further to correct the local boundary marked by the mobile robot when traveling in the preset planned direction.

As shown in Fig. 2, these exploration boundaries may include linear boundaries and curved boundaries, and on the basis of different boundary type division standards, these exploration boundaries may also include physical boundaries 203 (obstacle boundaries) and virtual boundaries. Since there is no obstacle blocking a detection signal of the remote sensor on the right side of the body within the effective detection distance on the right side with the current position 201 of the mobile robot as the center, the virtual boundary at the right side of Fig. 2 is an arc line scanned with the current position 201 of the mobile robot as the center and the effective detection distance d as a radius, that is, the virtual boundary at the right side of Fig. 2 is a curved boundary. Similarly, there are similar virtual boundaries on an upper side and a lower side of the current position 201 of the mobile robot in Fig. 2, and these virtual boundaries are the exploration boundaries farthest from the current position 201 of the mobile robot in the corresponding directions. In Fig. 2, all the virtual boundaries (the curved boundaries in Fig. 2) and all the physical boundaries (a black thick line at a left side of Fig. 2 and two black right-angled thick lines at the right side of Fig. 2) define an exploration area 202 of the mobile robot in a rotation phase, which is a part of the effective distance measurement area of the mobile robot in the step 3.

As shown in Fig. 2, there is an obstacle 203 within an effective detection distance on a left side of the position 201 of the mobile robot, the obstacle 203 is within an effective detection range of rotary scanning of the mobile robot and an outline boundary of the obstacle 203 is linear, and a vertical distance between the body center of the mobile robot at the position 201 and the outline boundary of the obstacle 203 is less than the effective detection distance, linear distances between two ends of the outline boundary of the obstacle 203 and the body center of the mobile robot at the position 201 are also less than the effective detection distance. The sensed distance generated when a detection direction of the remote sensor of the mobile robot covers the outline boundary of the obstacle 203 includes: the vertical distance between the body center of the mobile robot at the position 201 and the outline boundary of the obstacle 203, and the linear distance between the two ends of the outline boundary of the obstacle 203 and the body center of the mobile robot at the position 201.

In the embodiment of Fig. 2, in the case that the mobile robot selects the outline boundary of the obstacle 203 as the exploration sub-boundary after completes rotation, the exploration sub-boundary is a linear boundary. Then the mobile robot enters a stage of traveling in the preset planned direction, the mobile robot is controlled to be configured to advance in a direction of the linear boundary, and then the linear boundary maintains aligned to correct a real-time traveling direction of the mobile robot, so as to maintain navigation accuracy of the mobile robot in the direction of the linear boundary. The preset planned direction is parallel to the exploration sub-boundary, that is, the extending direction of the outline boundary of the obstacle 203 in Fig. 2 is parallel to the preset planned direction. In some working scenarios, when the advancing direction of the mobile robot deviates from the direction of the linear boundary, the advancing direction of the mobile robot is adjusted to return to the direction of the linear boundary.

As one embodiment, as shown in Fig. 3, the mobile robot advances along a linear path 301, and a local boundary on a right side of the linear path 301 is marked by a sensed distance of the remote sensor mounted on the right side surface of the mobile robot. When the mobile robot advances in an arrow direction to which the linear path 301 points, a detector direction of the remote sensor mounted on the right side surface of the mobile robot maintains rightward, such that the detector direction of the remote sensor is fixed. As shown in Fig. 3, grids occupied by the mobile robot when advancing along the linear path 301 are delimited between two thick black lines 302, a grid area scanned by the remote sensor mounted on the right side surface of the mobile robot is shown as an area 303, and the area 303 is scanned on the grid map according to the sensed distance of the remote sensor. Therefore, in the embodiment, the mobile robot is controlled to travel along the linear boundary, the remote sensor is used to mark an "exploration area" on the side of the preset planned direction, and the robot may not be required to work and traverse in the area.

It should be noted that the local boundaries may be divided into linear boundaries and curved boundaries, and the linear boundaries may be divided into physical boundaries (obstacle boundaries) and virtual boundaries.

Optionally, as shown in Fig. 3, when the mobile robot advances along the linear path 301, in the case that the remote sensor mounted on the right side surface of the body of the mobile robot does not sense obstacle information within the effective detection distance d (including a position distanced from the remote sensor by the effective detection distance d) on the right side, a local boundary parallel to the linear path 301 is marked at a position distanced from the linear path 301 by an effective detection distance d, that is, the virtual boundary 305, where the virtual boundary 305 is a linear boundary marked according to a farthest effective sensed distance of the remote sensor. It can be known from the geometric principle that a line distance between a linear path on which the mobile robot travels when completely marking the virtual boundary 305 and the linear path 301 is a shortest distance between the linear path 301 and the linear path 301, and a projection of the path on which the mobile robot travels when completely marking the virtual boundary 305 on the virtual boundary 305 overlaps the virtual boundary 305. In the embodiment, a farthest boundary point is marked according to the effective detection distance of the remote sensor, and then environment boundaries for describing track characteristics of a current advancing path of the mobile robot is scanned.

On the basis of the above embodiments, as shown in Fig. 3, after marking the virtual boundary 305, the mobile robot continues to advance along the linear path 301. In this process, in the case that the remote sensor mounted on the right side surface of the body of the mobile robot senses the obstacle information within the effective detection distance d on the right side thereof, a physical boundary 304 parallel to the linear path 301 at a position distanced from the linear path 301 by a first detection distance is marked, where the physical boundary 304 is an outline of a corresponding side of an obstacle marked by the mobile robot according to a sensed distance of the remote sensor on the right side of the mobile robot. The corresponding side of the obstacle sensed by the remote sensor of the mobile robot is a side surface reflecting a detection signal of the remote sensor. After marking the virtual boundary 305, when the mobile robot continues to advance along the linear path 301, especially in a rightward detector direction of the remote sensor on the right side of the body center of the mobile robot, a linear distance between the body center of the mobile robot and a boundary point of a physical boundary 304 marked in real time is less than or equal to the effective detection distance d, that is, the above first detection distance is less than or equal to the effective detection distance d. In the embodiment, measured distance information of an obstacle outline marked by the remote sensor is used for establishing an obstacle boundary which is parallel to a projection of a corresponding side of a grid correspondingly marked of a current position of the mobile robot, such as the physical boundary 304 in Fig. 3, so as to enable the robot to actively sense peripheral outline information of an obstacle in a current distance measurement area.

Optionally, in the case that the exploration sub-boundary is a curved boundary, the mobile robot is controlled to advance in a direction of the curved boundary, such that after the mobile robot proceeds to the step 2, the preset planned direction is a curved direction. Then the mobile robot is made to advance in the curved direction and mark a local boundary on a fixed side of the curved direction by means of the remote sensor mounted on the same side surface of the mobile robot. When the mobile robot advances in the curved direction, a detection direction of the remote sensor is not unique, and the detection directions of the remote sensor will constantly change along with a tortuous advance of the mobile robot, so as to acquire measured distance information in a plurality of different directions. Compared with a mobile robot in the above embodiment which linearly travels and only acquires measured distance information in a fixed direction, the mobile robot in the embodiment may gradually "supplements" surrounding boundary point measured distance information when traveling in the curve direction, so as to scan relatively complete environment outlines, and further to conveniently carry out more intelligent path planning according to the environment outline information. It should be noted that a marking method of the curved boundaries (curved boundaries may also be divided into physical boundaries (obstacle boundaries) and virtual boundaries) may be determined with reference to a marking method of the linear boundaries in the above embodiment, and will not repeated herein.

In the above embodiment, after the local boundary is marked on the grid map instantly constructed by the mobile robot, the mobile robot is controlled to transmit the grid map with the marked local boundary to a visual mobile terminal by means of wireless/wired signals such that the visual mobile terminal may display an area delimited by means of the local boundary to a user. In the embodiment, all marked local boundaries are marked on the same grid map and may be displayed to a user in an interface form, such that the user may see an outline of a local environment in advance in a map exploration stage of the mobile robot, so as to improve user experience.

An embodiment of the disclosure further discloses a mobile robot. The mobile robot includes a processing unit, at least one remote sensor is mounted on a side surface of a body of the mobile robot, and the processing unit is used for executing a program corresponding to the environment boundary construction method. The mobile robot rotates a body to scan distance information of a local environment at first, the remote sensor arranged on a side surface is used to mark local boundaries step by step, and then in combination with exploration boundaries acquired by means of rotation of the remote sensor at an initial position, delimited environment boundaries of a current effective distance measurement area of the mobile robot are formed, so as to acquire an outline of an indoor room area by means of a distance measurement method which is lower in cost and simpler. Compared with a solution that a laser sensor acquires outline information of environment boundaries by means of rotary laser scanning, the technical solution reduces manufacture cost of the robot, is easy to implement and has excellent expandability.

It should be noted that the processing unit controls operations of the mobile robot, and the processing unit may also be referred to as a central processing unit (CPU). The processing unit may be an integrated circuit chip having a signal sequence processing capability. The processing unit may also be a general-purpose processor, a digital signal processor (DSP), an application-specific integrated circuit (ASIC), a field programmable gate array (FPGA) or other programmable logic devices, discrete gate or transistor logic devices and discrete hardware components. The general-purpose processing unit may be a microprocessor, or the processing unit may be any conventional processor, etc. The remote sensor may acquire distance information between an obstacle within a measurement range (equivalent to the above effective detection distance) and the remote sensor, which may also be considered that the remote sensor may acquire distance information between an obstacle within the measurement range (equivalent to the effective detection distance) and the body center of the mobile robot. The processing unit is used for executing instructions, so as to implement the method provided by any embodiment of the environment boundary construction method based on a remote sensor in the disclosure, as well as non-conflicting combinations.

In the embodiment, a mounting position of the remote sensor is in a direction perpendicular to an advancing direction of the mobile robot, where a detector direction of the remote sensor is in the direction perpendicular to the advancing direction of the mobile robot, or the detector direction of the remote sensor forms a preset detection angle relative to the advancing direction of the mobile robot, and the remote sensor is used for measuring distance information of environment boundaries (including the exploration boundaries and the local boundary in the above embodiment) on a fixed side of the advancing direction of the mobile robot; alternatively the mounting position of the remote sensor is on an advancing plane of the mobile robot and forms an inclined mounting angle relative to the advancing direction of the mobile robot, where the detector direction of the remote sensor is in the direction perpendicular to the advancing direction of the mobile robot, or the detector direction of the remote sensor forms a preset detection angle relative to the advancing direction of the mobile robot, and the remote sensor is used for measuring the distance information of the environment boundaries (including the exploration boundaries and the local boundary in the above embodiment) on the fixed side of the advancing direction of the mobile robot. It should be noted that the inclined mounting angle is not 90 degrees, but in this case, the measured distance information of the remote sensor subjected to position and orientation coordinate conversion of a software algorithm may achieve distance measurement and positioning effects the same as that of the remote sensor mounted perpendicular to the advancing direction of the mobile robot.

Optionally, the mobile robot includes at least two remote sensors, as shown in Fig. 1, two remote sensors are arranged on a left side surface of the body 101 and a right side surface of the body 101 of the mobile robot respectively, the remote sensor 106 is arranged near a left wheel 102, the remote sensor 104 is mounted near a right wheel 102, and a detector direction 107 of the remote sensor on the left side and a detector direction 105 of the remote sensor on the right side are both perpendicular to the advancing direction 103 of the mobile robot. The remote sensors are used for measuring distance information of obstacles on the left side and the right side of the mobile robot on the advancing plane of the mobile robot simultaneously, which includes a distance between the obstacle boundary and the remote sensor and the farthest boundary point that may be detected by the remote sensor. The advancing direction 103 of the mobile robot points to a front end of the body of the mobile robot. In the embodiment, boundary information acquired by the mobile robot in a map boundary exploration stage is enriched, and positioning accuracy of an inertial navigation robot is improved.

It should be noted that the remote sensor may be a single-point laser ranging sensor, and may emit a laser ranging ray, where the laser ranging ray may be visible light or invisible light. The laser ranging ray emitted by the remote sensor may irradiate a surface of an obstacle, and a straight line where a direction of a laser beam of the remote sensor is positioned just passes through the body center of the mobile robot in a left-right direction. The effective detection distance of the remote sensor is 4 meters to 50 meters.

Optionally, the remote sensor is mounted on a front half side surface or a rear half side surface of a body of the mobile robot, which correspond to a front side or a rear side of the remote sensor 104 of Fig. 1. The detector direction of the remote sensor maintains perpendicular to the advancing direction 103 of the mobile robot. The front half side surface and the rear half side surface of the mobile robot are separated by a central axis passing through the body center of the mobile robot, and the central axis is perpendicular to the advancing direction of the mobile robot. Compared with the prior art, the method reduces computation amount and errors consumed by marking and scanning the environment boundaries.

Obviously, the above embodiments are merely examples given for clear illustration, and are not intended to limit implementations. For a person of ordinary skill in the pertained field, modifications or variations in other forms may make on the basis of the above description. There are no need and no way to exhaust all the implementations. Obvious modifications or variations derived shall still fall within the protection scope of the disclosure.

## Claims

1. An environment boundary construction method based on at least one remote sensor, comprising:
step 1, starting a mobile robot, and then controlling the mobile robot to rotate, so as to enable the mobile robot to mark exploration boundaries according to sensed distance information of the at least one remote sensor (104,106);
step 2, marking a local boundary according to a sensed distance of the at least one remote sensor (104,106) on a same side surface of the mobile robot when the mobile robot advances in a preset planned direction after the mobile robot completes rotation, wherein the preset planned direction is selected and configured from directions of all marked exploration boundaries; and
step 3, delimiting environment boundaries of an effective distance measurement area of the mobile robot by the local boundary and the exploration boundaries; wherein
at least one remote sensor (104,106) is mounted on a side surface of the mobile robot,
wherein after the step 3, the method further comprises:
rotating and translating, in a case that it is determined that a degree of overlap between the environment boundaries delimited in the step 3 and outline boundaries of a same area on a historical map do not conform to a preset map overlap ratio, the environment boundaries delimited in the step 3 to adjust the degree of the overlap between the environment boundaries delimited in the step 3 and the outline boundaries of the same area on the historical map to conform to the preset map overlap ratio, so as to supplement boundaries of distance detection blind areas of the at least one remote sensor (104,106) on a basis of the environment boundaries; wherein
the distance detection blind areas go beyond an effective detection distance of the at least one remote sensor (104,106); and
the historical map is a grid map of environment boundaries that are pre-marked and delimited by the mobile robot in a same effective distance measurement area.

2. The environment boundary construction method according to claim 1, wherein the preset map overlap ratio comprises a preset position and orientation difference, and in the case that the degree of overlap between the environment boundaries delimited in the step 3 and the outline boundaries of the same area on the historical map do not conform to the preset map overlap ratio, a difference between a position and orientation of the environment boundaries delimited in the step 3 and a position and orientation of the outline boundaries of the same area on the historical map is greater than the preset position and orientation difference.

3. The environment boundary construction method according to claim 2, wherein between the step 1 and the step 2, the method further comprises:
controlling, in a case that the mobile robot selects an exploration sub-boundary from the exploration boundaries marked by means of the rotation in the step 1 and after the mobile robot completes the rotation in the step 1, the mobile robot to advance in an extending direction of the exploration sub-boundary; wherein the preset planned direction of the mobile robot in the step 2 is parallel to the extending direction of the exploration sub-boundary; and
the exploration boundaries comprise the exploration sub-boundary, and the exploration sub-boundary is selected for planning a traveling direction of the mobile robot.

4. The environment boundary construction method according to claim 3, wherein in a case that the exploration sub-boundary is a linear boundary, the mobile robot is controlled to advance in an extending direction of the linear boundary, such that the preset planned direction in the step 2 is a linear direction; and then the mobile robot is controlled to advance in the linear direction in the step 2 and mark a local boundary on a fixed side of the linear direction according to the sensed distance of the at least one remote sensor (104,106) mounted on the same side surface of the mobile robot;
when the mobile robot advances in the linear direction, a detection direction of the at least one remote sensor (104,106) is unique and fixed; and
the extending direction of the linear boundary is a linear direction.

5. The environment boundary construction method according to claim 3, wherein in a case that the exploration sub-boundary is a curved boundary, the mobile robot is controlled to advance in a direction of the curved boundary, such that the preset planned direction in the step 2 is a curved direction; and then the mobile robot is controlled to advance in the curved direction and mark a local boundary on a fixed side of the curved direction according to the sensed distance of the at least one remote sensor (104,106) mounted on the same side surface of the mobile robot;
when the mobile robot advances in the curved direction, a detection direction of the at least one remote sensor (104,106) is not unique; and
an extending direction of the curved boundary is a curved direction.

6. The environment boundary construction method according to claim 4 or 5, wherein when the mobile robot advances in the preset planned direction, in a case that the at least one remote sensor (104,106) does not sense distance information of an obstacle within the effective detection distance, a direction of the local boundary marked in the step 2 is parallel to the preset planned direction; and a line distance between a path on which the mobile robot travels for marking the local boundary and the local boundary is equal to the effective detection distance, and a projection of the path on which the mobile robot travels for marking the local boundary on the local boundary overlaps the local boundary.

7. The environment boundary construction method according to claim 6, wherein when the mobile robot advances in the preset planned direction, in a case that the at least one remote sensor (104,106) senses the distance information of the obstacle within the effective detection distance, the local boundary marked in the step 2 is an outline of a corresponding side of the obstacle, and the corresponding side of the obstacle is a side surface reflecting a detection signal of the at least one remote sensor (104,106); and a linear distance between a body (101) center of the mobile robot and a boundary point of the local boundary marked in real time is less than or equal to the effective detection distance.

8. The environment boundary construction method according to claim 7, wherein after the local boundary is marked on a grid map instantly constructed by the mobile robot, the mobile robot is controlled to transmit a grid map with marked local boundary to a visual mobile terminal by means of wireless/wired signals such that the visual mobile terminal can display an area delimited by the local boundary to a user.

9. A mobile robot, comprising: a processing unit, wherein at least one remote sensor (104,106) is mounted on a side surface of a body (101) of the mobile robot, and the processing unit is used for executing a program corresponding to the environment boundary construction method of any one of claims 1-8.

10. The mobile robot according to claim 9, wherein a mounting position of the at least one remote sensor (104,106) is in a direction perpendicular to an advancing direction (103) of the mobile robot, and a detector direction (105,107) of the at least one remote sensor (104,106) is in the direction perpendicular to the advancing direction (103) of the mobile robot, or the detector direction (105,107) of the at least one remote sensor (104,106) forms a preset detection angle relative to the advancing direction of the mobile robot; alternatively,
a mounting position of the at least one remote sensor (104,106) is on an advancing plane of the mobile robot and forms an inclined mounting angle relative to the advancing direction of the mobile robot, the at least one detector direction (105,107) of the at least one remote sensor (104,106) is in the direction perpendicular to the advancing direction (103) of the mobile robot, or the at least one detector direction (105,107) of the at least one remote sensor (104,106) forms a preset detection angle relative to the advancing direction (103) of the mobile robot, and the inclined mounting angle is not 90 degrees.

11. The mobile robot according to claim 10, wherein the mobile robot comprises at least two remote sensors (104,106), which are arranged on a left side surface and a right side surface of the body (101) of the mobile robot respectively and are used for measuring distance information of obstacles on a left side and a right side of the mobile robot on the advancing plane of the mobile robot simultaneously; and
the advancing direction (103) of the mobile robot points to a front end of the body (101) of the mobile robot.

12. The mobile robot according to claim 10, wherein the at least one remote sensor (104,106) is mounted on a front half side surface or a rear half side surface of a body (101) of the mobile robot,
the front half side surface and the rear half side surface of the mobile robot are separated by a central axis passing through a body center of the mobile robot, and the central axis is perpendicular to the advancing direction (103) of the mobile robot.

## Patentansprüche

1. Verfahren für eine Umgebungsbegrenzungskonstruktion auf Grundlage von mindestens einem entfernten Sensor, umfassend:
Schritt 1, Starten eines mobilen Roboters und dann Steuern des mobilen Roboters, um zu rotieren, um zu ermöglichen, dass der mobile Roboter Erkundungsbegrenzungen entsprechend erfassten Entfernungsinformationen des mindestens einen entfernten Sensors (104, 106) markiert;
Schritt 2, Markieren einer lokalen Begrenzung entsprechend einer erfassten Entfernung des mindestens einen entfernten Sensors (104, 106) auf einer gleichen Seitenfläche des mobilen Roboters, wenn sich der mobile Roboter nach Abschluss der Rotation des mobilen Roboters in eine voreingestellte geplante Richtung vorwärts bewegt, wobei die voreingestellte geplante Richtung aus Richtungen aller markierten Erkundungsbegrenzungen ausgewählt und konfiguriert wird; und
Schritt 3, Abgrenzen von Umgebungsbegrenzungen eines effektiven Entfernungsmessbereichs des mobilen Roboters durch die lokale Begrenzung und die Erkundungsbegrenzungen; wobei
mindestens ein entfernter Sensor (104, 106) an einer Seitenfläche des mobilen Roboters montiert ist,
wobei nach dem Schritt 3 das Verfahren ferner Folgendes umfasst:
Rotieren und Verschieben der in dem Schritt 3 abgegrenzten Umgebungsbegrenzungen, in einem Fall, in dem bestimmt wird, dass ein Grad an Überlappung zwischen den in Schritt 3 abgegrenzten Umgebungsbegrenzungen und Umrissbegrenzungen eines gleichen Bereichs auf einer Verlaufskarte nicht mit einem voreingestellten Kartenüberlappungsverhältnis übereinstimmt, um den Grad der Überlappung zwischen den in dem Schritt 3 abgegrenzten Umgebungsbegrenzungen und den Umrissbegrenzungen desselben Bereichs auf der Verlaufskarte einzustellen, um dem voreingestellten Kartenüberlappungsverhältnis zu entsprechen, um Begrenzungen von Entfernungsdetektionsblindbereichen des mindestens einen entfernten Sensors (104, 106) auf Grundlage der Umgebungsbegrenzungen zu ergänzen; wobei
die Entfernungsdetektionsblindbereiche über eine effektive Detektionsentfernung des mindestens einen entfernten Sensors (104, 106) hinausgehen; und
die Verlaufskarte eine Gitterkarte von Umgebungsbegrenzungen ist, die durch den mobilen Roboter in einem gleichen effektiven Entfernungsmessbereich vormarkiert und abgegrenzt werden.

2. Verfahren für eine Umgebungsbegrenzungskonstruktion nach Anspruch 1, wobei das voreingestellte Kartenüberlappungsverhältnis eine voreingestellte Positions- und Ausrichtungsdifferenz umfasst und, in dem Fall, dass der Grad an Überlappung zwischen den in dem Schritt 3 abgegrenzten Umgebungsbegrenzungen und den Umrissbegrenzungen desselben Bereichs auf der Verlaufskarte nicht dem voreingestellten Kartenüberlappungsverhältnis entspricht, eine Differenz zwischen einer Position und Ausrichtung der in dem Schritt 3 abgegrenzten Umgebungsbegrenzungen und einer Position und Ausrichtung der Umrissbegrenzungen desselben Bereichs auf der Verlaufskarte größer als die voreingestellte Positions- und Ausrichtungsdifferenz ist.

3. Verfahren für eine Umgebungsbegrenzungskonstruktion nach Anspruch 2, wobei zwischen dem Schritt 1 und dem Schritt 2 das Verfahren ferner Folgendes umfasst:
Steuern des mobilen Roboters, um sich in einer Erstreckungsrichtung einer Erkundungsuntergegrenzung vorwärts zu bewegen, in einem Fall, dass der mobile Roboter die Erkundungsunterbegrenzung aus den Erkundungsbegrenzungen auswählt, die mittels der Rotation in dem Schritt 1 markiert wurden, und nachdem der mobile Roboter die Rotation in dem Schritt 1 abgeschlossen hat; wobei die voreingestellte geplante Richtung des mobilen Roboters in dem Schritt 2 parallel zu der Erstreckungsrichtung der Erkundungsunterbegrenzung ist; und
die Erkundungsbegrenzungen die Erkundungsunterbegrenzung umfassen und die Erkundungsunterbegrenzung zum Planen einer Bewegungsrichtung des mobilen Roboters ausgewählt wird.

4. Verfahren für eine Umgebungsbegrenzungskonstruktion nach Anspruch 3, wobei in einem Fall, in dem die Erkundungsunterbegrenzung eine lineare Begrenzung ist, der mobile Roboter gesteuert wird, um sich in einer Erstreckungsrichtung der linearen Begrenzung vorwärts zu bewegen, sodass die voreingestellte geplante Richtung in dem Schritt 2 eine lineare Richtung ist; und dann der mobile Roboter gesteuert wird, um sich in dem Schritt 2 in der linearen Richtung vorwärts zu bewegen und eine lokale Begrenzung auf einer festen Seite der linearen Richtung entsprechend der erfassten Entfernung des mindestens einen entfernten Sensors (104, 106), der auf der gleichen Seitenfläche des mobilen Roboters montiert ist, zu markieren;
wenn sich der mobile Roboter in der linearen Richtung vorwärts bewegt, eine Detektionsrichtung des mindestens einen entfernten Sensors (104, 106) eindeutig und fest ist; und
die Erstreckungsrichtung der linearen Begrenzung eine lineare Richtung ist.

5. Verfahren für eine Umgebungsbegrenzungskonstruktion nach Anspruch 3, wobei in einem Fall, in dem die Erkundungsunterbegrenzung eine gekrümmte Begrenzung ist, der mobile Roboter gesteuert wird, um sich in einer Richtung der gekrümmten Begrenzung vorwärts zu bewegen, sodass die voreingestellte geplante Richtung in dem Schritt 2 eine gekrümmte Richtung ist; und dann der mobile Roboter gesteuert wird, um sich in der gekrümmten Richtung vorwärts zu bewegen und eine lokale Begrenzung auf einer festen Seite der gekrümmten Richtung entsprechend des erfassten Entfernung des mindestens einen entfernten Sensors (104, 106), der auf der gleichen Seitenfläche des mobilen Roboters montiert ist, zu markieren;
wenn sich der mobile Roboter in die gekrümmte Richtung bewegt, eine Detektionsrichtung des mindestens einen entfernten Sensors (104, 106) nicht eindeutig ist; und
eine Erstreckungsrichtung der gekrümmten Begrenzung eine gekrümmte Richtung ist.

6. Verfahren für eine Umgebungsbegrenzungskonstruktion nach Anspruch 4 oder 5, wobei, wenn sich der mobile Roboter in der voreingestellten geplanten Richtung vorwärts bewegt, in einem Fall, in dem der mindestens eine entfernte Sensor (104, 106) keine Entfernungsinformationen eines Hindernisses innerhalb der effektiven Detektionsentfernung erfasst, eine Richtung der in dem Schritt 2 markierten lokalen Begrenzung parallel zu der voreingestellten geplanten Richtung ist; und eine Linienentfernung zwischen einer Bahn, auf der sich der mobile Roboter zum Markieren der lokalen Begrenzung bewegt, und der lokalen Begrenzung gleich der effektiven Detektionsentfernung ist, und eine Projektion der Bahn, auf der sich der mobile Roboter zum Markieren der lokalen Begrenzung auf der lokalen Begrenzung bewegt, die lokale Begrenzung überlappt.

7. Verfahren für eine Umgebungsbegrenzungskonstruktion nach Anspruch 6, wobei, wenn sich der mobile Roboter in der voreingestellten geplanten Richtung vorwärts bewegt, in einem Fall, in dem der mindestens eine entfernte Sensor (104, 106) die Entfernungsinformationen des Hindernisses innerhalb der effektiven Detektionsentfernung erfasst, die in dem Schritt 2 markierte lokale Begrenzung ein Umriss einer entsprechenden Seite des Hindernisses ist und die entsprechende Seite des Hindernisses eine Seitenfläche ist, die ein Detektionssignal des mindestens einen entfernten Sensors (104, 106) reflektiert; und eine lineare Entfernung zwischen einer Mitte des Körpers (101) des mobilen Roboters und einem Begrenzungspunkt der in Echtzeit markierten lokalen Begrenzung kleiner als die effektive Detektionsentfernung oder gleich dieser ist.

8. Verfahren für eine Umgebungsbegrenzungskonstruktion nach Anspruch 7, wobei, nachdem die lokale Begrenzung auf einer Gitterkarte markiert wurde, die sofort durch den mobilen Roboter konstruiert wird, der mobile Roboter gesteuert wird, um eine Gitterkarte mit einer markierten lokalen Begrenzung mittels drahtloser/drahtgebundener Signale an ein visuelles mobiles Endgerät zu übertragen, sodass das visuelle mobile Endgerät einem Benutzer einen durch die lokale Begrenzung abgegrenzten Bereich anzeigen kann.

9. Mobiler Roboter, umfassend: eine Verarbeitungseinheit, wobei mindestens ein entfernter Sensor (104, 106) an einer Seitenfläche eines Körpers (101) des mobilen Roboters montiert ist und die Verarbeitungseinheit zum Ausführen eines Programms verwendet wird, das dem Verfahren für eine Umgebungsbegrenzungskonstruktion nach einem der Ansprüche 1-8 entspricht.

10. Mobiler Roboter nach Anspruch 9, wobei eine Montageposition des mindestens einen entfernten Sensors (104, 106) in einer Richtung senkrecht zu einer Vorwärtsbewegungsrichtung (103) des mobilen Roboters liegt und eine Detektorrichtung (105, 107) des mindestens einen entfernten Sensors (104, 106) in der Richtung senkrecht zu der Vorwärtsbewegungsrichtung (103) des mobilen Roboters liegt oder die Detektorrichtung (105, 107) des mindestens einen entfernten Sensors (104, 106) einen voreingestellten Detektionswinkel in Bezug auf die Vorwärtsbewegungsrichtung des mobilen Roboters bildet; alternativ
eine Montageposition des mindestens einen entfernten Sensors (104, 106) auf einer Vorwärtsbewegungsebene des mobilen Roboters liegt und einen geneigten Montagewinkel bezogen auf die Vorwärtsbewegungsrichtung des mobilen Roboters bildet, die mindestens eine Detektorrichtung (105, 107) des mindestens einen entfernten Sensors (104, 106) in der Richtung senkrecht zu der Vorwärtsbewegungsrichtung (103) des mobilen Roboters liegt oder die mindestens eine Detektorrichtung (105, 107) des mindestens einen entfernten Sensors (104, 106) einen voreingestellten Detektionswinkel bezogen auf die Vorwärtsbewegungsrichtung (103) des mobilen Roboters bildet und der geneigte Montagewinkel nicht 90 Grad beträgt.

11. Mobiler Roboter nach Anspruch 10, wobei der mobile Roboter mindestens zwei entfernte Sensoren (104, 106) umfasst, die jeweils auf einer linken Seitenfläche und einer rechten Seitenfläche des Körpers (101) des mobilen Roboters angeordnet sind und zum gleichzeitigen Messen von Entfernungsinformationen von Hindernissen auf einer linken Seite und einer rechten Seite des mobilen Roboters auf der Vorwärtsbewegungsebene des mobilen Roboters verwendet werden; und
die Vorwärtsbewegungsrichtung (103) des mobilen Roboters zu einem vorderen Ende des Körpers (101) des mobilen Roboters weist.

12. Mobiler Roboter nach Anspruch 10, wobei der mindestens eine entfernte Sensor (104, 106) an einer vorderen Halbseitenfläche oder einer hinteren Halbseitenfläche eines Körpers (101) des mobilen Roboters montiert ist,
die vordere Halbseitenfläche und die hintere Halbseitenfläche des mobilen Roboters durch eine zentrale Achse getrennt sind, die durch eine Körpermitte des mobilen Roboters verläuft, und die zentrale Achse senkrecht zu der Vorwärtsbewegungsrichtung (103) des mobilen Roboters ist.

## Revendications

1. Procédé de construction de limite d'environnement fondé sur au moins un capteur distant, comprenant :
étape 1, démarrage d'un robot mobile, puis commande au robot mobile de tourner, afin de permettre au robot mobile de marquer des limites d'exploration conformément aux informations de distance détectées de l'au moins un capteur distant (104, 106) ;
étape 2, marquage d'une limite locale conformément à une distance détectée de l'au moins un capteur distant (104, 106) sur une même surface latérale du robot mobile lorsque le robot mobile avance dans une direction planifiée prédéfinie après que le robot mobile a terminé la rotation, dans lequel la direction planifiée prédéfinie est sélectionnée et configurée à partir des directions de toutes les limites d'exploration marquées ; et
étape 3, délimitation des limites d'environnement d'une zone de mesure de distance effective du robot mobile par la limite locale et les limites d'exploration ; dans lequel
au moins un capteur distant (104, 106) est monté sur une surface latérale du robot mobile,
dans lequel après l'étape 3, le procédé comprend en outre :
la rotation et la translation, dans le cas où il est déterminé qu'un degré de chevauchement entre les limites d'environnement délimitées à l'étape 3 et les limites de contour d'une même zone sur une carte historique ne sont pas conformes à un rapport de chevauchement de carte prédéfini, les limites d'environnement délimitées à l'étape 3 pour ajuster le degré de chevauchement entre les limites d'environnement délimitées à l'étape 3 et les limites de contour de la même zone sur la carte historique pour se conformer au rapport de chevauchement de carte prédéfini, afin de compléter les limites des zones aveugles de détection de distance de l'au moins un capteur distant (104, 106) sur la base des limites d'environnement ; dans lequel
les zones aveugles de détection de distance vont au-delà d'une distance de détection effective de l'au moins un capteur distant (104, 106) ; et
la carte historique est une carte quadrillée des limites d'environnement qui sont pré-marquées et délimitées par le robot mobile dans une même zone de mesure de distance effective.

2. Procédé de construction de limite d'environnement selon la revendication 1, dans lequel le rapport de chevauchement de carte prédéfini comprend une différence de position et d'orientation prédéfinie, et dans le cas où le degré de chevauchement entre les limites d'environnement délimitées à l'étape 3 et les limites de contour de la même zone sur la carte historique ne sont pas conformes au rapport de chevauchement de carte prédéfini, une différence entre une position et une orientation des limites d'environnement délimitées à l'étape 3 et une position et une orientation des limites de contour de la même zone sur la carte historique est supérieure à la différence de position et d'orientation prédéfinie.

3. Procédé de construction de limite d'environnement selon la revendication 2, dans lequel entre l'étape 1 et l'étape 2, le procédé comprend en outre :
la commande, dans le cas où le robot mobile sélectionne une sous-limite d'exploration parmi les limites d'exploration marquées au moyen de la rotation à l'étape 1 et après que le robot mobile a terminé la rotation à l'étape 1, au robot mobile d'avancer dans une direction d'extension de la sous-limite d'exploration ; dans lequel la direction planifiée prédéfinie du robot mobile à l'étape 2 est parallèle à la direction d'extension de la sous-limite d'exploration ; et
les limites d'exploration comprennent la sous-limite d'exploration, et la sous-limite d'exploration est sélectionnée pour planifier une direction de déplacement du robot mobile.

4. Procédé de construction de limite d'environnement selon la revendication 3, dans lequel, dans le cas où la sous-limite d'exploration est une limite linéaire, le robot mobile est commandé d'avancer dans une direction d'extension de la limite linéaire, de sorte que la direction planifiée prédéfinie à l'étape 2 soit une direction linéaire ; puis le robot mobile est commandé d'avancer dans la direction linéaire à l'étape 2 et de marquer une limite locale sur un côté fixe de la direction linéaire conformément à la distance détectée de l'au moins un capteur distant (104, 106) monté sur la même surface latérale du robot mobile ;
lorsque le robot mobile avance dans la direction linéaire, une direction de détection de l'au moins un capteur distant (104, 106) est unique et fixe ; et
la direction d'extension de la limite linéaire est une direction linéaire.

5. Procédé de construction de limite d'environnement selon la revendication 3, dans lequel, dans le cas où la sous-limite d'exploration est une limite en courbe, le robot mobile est commandé d'avancer dans une direction de la limite en courbe, de sorte que la direction planifiée prédéfinie à l'étape 2 soit une direction en courbe ; puis le robot mobile est commandé d'avancer dans la direction en courbe et de marquer une limite locale sur un côté fixe de la direction en courbe conformément à la distance détectée de l'au moins un capteur distant (104, 106) monté sur la même surface latérale du robot mobile ;
lorsque le robot mobile avance dans la direction en courbe, une direction de détection de l'au moins un capteur distant (104, 106) n'est pas unique ; et
une direction d'extension de la limite en courbe est une direction en courbe.

6. Procédé de construction de limite d'environnement selon la revendication 4 ou 5, dans lequel, lorsque le robot mobile avance dans la direction planifiée prédéfinie, dans le cas où l'au moins un capteur distant (104, 106) ne détecte pas d'informations de distance d'un obstacle dans la distance de détection effective, une direction de la limite locale marquée à l'étape 2 est parallèle à la direction planifiée prédéfinie ; et une distance de ligne entre un trajet sur lequel le robot mobile se déplace pour marquer la limite locale et la limite locale est égale à la distance de détection effective, et une projection du trajet sur lequel le robot mobile se déplace pour marquer la limite locale sur la limite locale chevauche la limite locale.

7. Procédé de construction de limite d'environnement selon la revendication 6, dans lequel, lorsque le robot mobile avance dans la direction planifiée prédéfinie, dans le cas où l'au moins un capteur distant (104, 106) détecte les informations de distance de l'obstacle dans la distance de détection effective, la limite locale marquée à l'étape 2 est un contour d'un côté correspondant de l'obstacle, et le côté correspondant de l'obstacle est une surface latérale reflétant un signal de détection de l'au moins un capteur distant (104, 106) ; et une distance linéaire entre un centre de corps (101) du robot mobile et un point de limite de la limite locale marquée en temps réel est inférieure ou égale à la distance de détection effective.

8. Procédé de construction de limite d'environnement selon la revendication 7, dans lequel, après que la limite locale a été marquée sur une carte quadrillée construite instantanément par le robot mobile, le robot mobile est commandé de transmettre une carte quadrillée avec une limite locale marquée à un terminal mobile visuel au moyen de signaux sans fil/filaires de sorte que le terminal mobile visuel puisse afficher une zone délimitée par la limite locale à un utilisateur.

9. Robot mobile, comprenant : une unité de traitement, dans lequel au moins un capteur distant (104, 106) est monté sur une surface latérale d'un corps (101) du robot mobile, et l'unité de traitement est utilisée pour exécuter un programme correspondant au procédé de construction de limite d'environnement de l'une quelconque des revendications 1 à 8.

10. Robot mobile selon la revendication 9, dans lequel une position de montage de l'au moins un capteur distant (104, 106) est dans une direction perpendiculaire à une direction d'avancement (103) du robot mobile, et une direction de détecteur (105, 107) de l'au moins un capteur distant (104, 106) est dans la direction perpendiculaire à la direction d'avancement (103) du robot mobile, ou la direction de détecteur (105, 107) de l'au moins un capteur distant (104, 106) forme un angle de détection prédéfini par rapport à la direction d'avancement du robot mobile ; en variante,
une position de montage de l'au moins un capteur distant (104, 106) est sur un plan d'avancement du robot mobile et forme un angle de montage incliné par rapport à la direction d'avancement du robot mobile, l'au moins une direction de détecteur (105, 107) de l'au moins un capteur distant (104, 106) est dans la direction perpendiculaire à la direction d'avancement (103) du robot mobile, ou l'au moins une direction de détecteur (105, 107) de l'au moins un capteur distant (104, 106) forme un angle de détection prédéfini par rapport à la direction d'avancement (103) du robot mobile, et l'angle de montage incliné n'est pas de 90 degrés.

11. Robot mobile selon la revendication 10, dans lequel le robot mobile comprend au moins deux capteurs distants (104, 106), qui sont agencés sur une surface latérale gauche et une surface latérale droite du corps (101) du robot mobile respectivement et sont utilisés pour mesurer des informations de distance d'obstacles sur un côté gauche et un côté droit du robot mobile sur le plan d'avancement du robot mobile simultanément ; et
la direction d'avancement (103) du robot mobile pointe vers une extrémité avant du corps (101) du robot mobile.

12. Robot mobile selon la revendication 10, dans lequel l'au moins un capteur distant (104, 106) est monté sur une surface latérale de la moitié avant ou une surface latérale de la moitié arrière d'un corps (101) du robot mobile,
la surface latérale de la moitié avant et la surface latérale de la moitié arrière du robot mobile sont séparées par un axe central passant par un centre de corps du robot mobile, et l'axe central est perpendiculaire à la direction d'avancement (103) du robot mobile.
